# EUROPEAN PATENT SPECIFICATION

(11) **EP 3 204 294 B1**
(45) Date of publication and mention of the grant of the patent: **19.04.2023**
(21) Application number: 15717275.0
(22) Date of filing: 24.03.2015
(51) Int. Cl.: B64C 39/06

(54) **METHODS FOR IMPROVEMENTS OF THE BOX WING AIRCRAFT CONCEPT AND CORRESPONDING AIRCRAFT CONFIGURATION**
VERFAHREN FÜR VERBESSERUNGEN DES BOXWING-FLUGZEUGKONZEPTS UND ENTSPRECHENDE FLUGZEUGKONFIGURATION
PROCÉDÉS POUR DES AMÉLIORATIONS DE LA CONCEPTION D'AILE EN STRUCTURE CAISSON D'UN AÉRONEF ET CONFIGURATION D'AÉRONEF CORRESPONDANTE

(43) Date of publication of application: 16.08.2017
(73) Proprietor: Hernadi, Andras, 11863 Stockholm (SE)
(72) Inventor: Hernadi, Andras, 11863 Stockholm (SE)
(86) International application number: PCT/SE2015/050349
(87) International publication number: WO 2016/048211

(56) References cited:
- WO-A1-88/06551
- WO-A1-2004/074093
- WO-A2-03/059736
- BG-B1- 65 998
- DE-U1- 20 111 224

## Description

### CROSS REFERENCE TO RELATED APPLICATIONS

This application claims priority from RCD EM 002544510-0001 and 002544510-0002, both filed on September 25, 2014, with OHIM/OAMI Reference "StratosLiner"; and also, priority from US Design Patent Application No. 29520505 filed on March 16, 2015, titled "Backward and forward swept aircraft wing sections in a decagonal box wing configuration". The USPTO has divided said Design Application into two separate Divisional Applications and granted two Design Patents: US D843,920 S (Mar. 26, 2019) and US D844,538 S (Apr. 2, 2019). The present PCT/SE2015/050349 application (filing date March 24, 2015) is also registered with file reference "StratosLiner", as well as the present EPO application. National Phase applications, in addition to the present EPO application: US 15512546 (pending), CN 201580051870, granted, No. of announcement of grant: CN 107000841 B, utility ("Invention") patent No. ZL201580051870.

### BACKGROUND OF THE INVENTION

This invention relates to the field of box wing aircraft design, with a focus on novel improvements of some of the features and adding new elements to the prior art in this field. The invention constitutes a new sub-class within Closed Wings (box wing, ring wing, joined wings) in the broader class Non-Planar Aircraft Wings.

The regular, conventional box wing configuration is comprised of a narrow backward swept front wing, a similarly narrow forward swept rear wing and a connecting non-lifting wingtip fence, a side wing, between the wingtips. The front wing root joins the lower part of the fuselage and the root of the rear wing joins the upper part of the fuselage, or the roots of the rear wings are elevated above the aft part of the fuselage using a vertical stabilizer, or two V-tail fins, for structural connection to the fuselage.

Most modem box wing aircraft designs with ambition for good aerodynamic performance have long and narrow wings such as WO 2004/074093 A1 or BG 65998 B1. Some designers reinforce the root of the thin and narrow front wing by using less sweep angle of the trailing edge at the root, for example BG 65998 B1. Other designers employ such an extra triangular area along half of the inboard trailing edge of the front wing, for easy installation of the flaps, such as DE 201 11 224 U1. The claims of WO 2004/074093 A1 focus on the aerodynamic channel between the tail fins and the rear wings. There is a box wing design where the inboard portion of the rear wing is anhedral and the outboard portion is dihedral, namely WO 88/06551 A1. Another design, WO 03/059736 A2, has three pairs of wings with the ambition of using the Coanda effect.

None of the cited prior art seems to show or suggest the combination of differently swept sections of both the front and rear wings. None of these patent documents are discussing the issue of reducing the wingspan of the box wing concept when using narrow wings. None of them are discussing the linkage between the cross-sectional area and the sweep angle of the wings, nor the application of the area rule method for better fuel storage in the fuselage by introducing wing sections with different sweep angles. The prior art seems to not pay attention to the length of the wingtip fence and novel options for structural strengthening of the box wing configuration.

The narrow front and rear wings of a box wing aircraft, together, must provide a sufficient wing area, compared to a monoplane aircraft with the same weight. Thereby, the wingspan of such a box wing aircraft is similar to that of a monoplane aircraft. For several reasons, a smaller wingspan is often preferable. Very large airliners should have a small wingspan to be manageable for our airports. It is desirable for airliners to carry more than a thousand passengers, but such a monoplane is difficult to design, because of the large wingspan.

Such a large aircraft is not easy to design as a box wing aircraft either. The wingspan is still large and the thin wings suffer bending and torsion, especially at the wingtips. The length of the wingtip fence is an important parameter for structural calculations. It may prove that the closed frame structure of the front and rear wings is not sufficiently strong and stiff. There is a risk that the wingtip fence of the regular, conventional box wing configuration must be strengthened a lot and might therefore be too heavy.

One of the general ideas behind using narrow wings is better aerodynamic performance. But airliners must carry a lot of fuel in the huge wings for long distance flights. There is not much place for fuel in the thin wings of a box wing aircraft.

It is necessary to obtain sufficient horizontal and vertical separation between multiple wings because of the aerodynamic interference issue. Otherwise, the box wing configuration is aerodynamically advantageous. The main streamline flow around the box wing aircraft is divided into two channels by the frame of the front and rear wings. There are three stream tube channels when the elevated rear wings and the fuselage are connected with V-tail fins. It would be preferable to have a narrow stream tube as a result of a small wingspan, and the aerodynamic performance would improve having more aerodynamic channels than two or three.

The above-mentioned Design Applications, RCD EM 002544510-0001, -0002 and US 29520505, were focused on the use of as many implementations of the Golden Ratio and the angles of the Golden Triangle as possible, as they are generally considered sources of beauty. The reason for these designs was to test the thesis: if an airplane is beautiful, it flies beautifully. These Design Applications and the present invention are related but there are a plurality of features, functions and qualities described in the present invention, not revealed in the design drawings. There is a box wing aircraft configuration implicitly disclosed in RCD EM 002544510-0001, a strictly aesthetic design, presented with not less than 12 measured pairs of dimensions with the Golden Ratio 1.618. Furthermore, there are also 13 leading and trailing edges presented with the measured Golden Angle and the angles of the Golden Triangle. The reason for these designs was to test the thesis: if an airplane is beautiful, it flies beautifully. The four engines of the aircraft in question form no part of the claimed design but this aircraft is not functional because all the four engines are clearly Ramjet-type engines which need an established airflow of several hundred km/h to start. The present invention is addressing this issue, too.

Furthermore, airport boarding bridges are not designed for a box wing aircraft. This problem must be resolved if the box wing concept is to be used for large passenger aircraft.

### SUMMARY OF THE INVENTION

The claimed invention provides methods for improving the regular, conventional box wing aircraft concept as defined in independent claims 1 and 9, and a manned or unmanned aircraft according to independent claim 3, with preferred embodiments defined in the dependent claims. In general, as the result of applying several method steps for improving the regular, conventional box wing concept, the aircraft comprises an extended fuselage; a pair of backward swept front wings attached to the front bottom of the fuselage; a pair of elevated forward swept rear wings with their roots joined together above the aft part of the fuselage; a highly swept wingtip fence on each side, connecting the wingtips of the front and rear wings; a V-tail, for structural connection between the rear wings and the fuselage; furthermore also a middle wing, extending from the upper middle part of the fuselage.

The front wing is divided into a dihedral root section, swept basically as the wing of a modem airliner, and a more dihedral and more swept tip section. The rear wing is divided into a basically horizontal root section, with a sweep angle similar to the swept wing of a modern airliner but forward swept, and a tip section, slightly anhedral and more forward swept than the root section. The word "basically" (e.g. "basically horizontal", above) is used as a synonym to "substantially", throughout the entire Specification, with reference to http://www.merriam-webster.com/thesaurus/basically.

In the preferable embodiment, the middle wing is divided into a basically horizontal or slightly anhedral root section and two tip sections, one forward swept and anhedral, another backward swept and dihedral. The front, middle and rear wings have four tip sections on each side of the aircraft. All the four wingtips of these are attached to the wingtip fence; two are joined to the front portion and two to the aft portion of the wingtip fence.

The root section of the middle wing is a suitable place for engines. If we use two traditional inner engines instead of the Ramjet-type engines disclosed in the above-mentioned design, EM 002544510-0001, the aircraft will be functional because gas turbine engines can give the aircraft the necessary velocity needed for the two outer, Ramjet-type engines to start.

The fuselage of the present invention can be area ruled which is a regular design procedure. The result is that a long middle section of the extended fuselage has a wide belly which can contain both landing gears and a large fuel tank. Dividing the front and rear wings into differently swept sections increases the cross-sectional area both front and rear and decreases it along a longer middle part of the aircraft. This novel, distinguishing feature makes a wider fuselage belly and thereby a larger fuel tank possible, the area rule design method still applied.

Another reason for using differently swept sections of the front and rear wings is that the wingtip fence would otherwise have been too long and too weak, especially when the fuselage is long and the front and rear wings are well separated horizontally.

With a middle wing introduced, the necessary wing area is distributed to three narrow wings, which makes a smaller wingspan, reduced by one third, possible. Shorter wings are stronger than long wings. Having a middle wing with two tip sections, both supporting the wingtip fence, is a desired feature if the box wing structure is to be strengthened.

The wings and fins of the regular, conventional box wing aircraft form two, or three, closed frames. Having a middle wing with two tip sections, the number of strong and stiff closed frame structures will be seven, formed by the 14 wing sections, together with the wingtip fences, the two V-tail fins and the fuselage.

These seven frames provide not only novel structural features but distinguishing aerodynamic benefits as well. These seven frames divide the stream tube around the aircraft into seven airflow channels. Using one vertical stabilizer instead of V-tail fins, the channels will be reduced to six. Embodiment with a simple middle wing can result in four or five aerodynamic channels, with one stabilizer or two V-tail fins, respectively.

There are a number of other qualities of the present invention which should be briefly mentioned, where the distinguishing features of the present invention improve, or significantly improve, the functioning of the box wing aircraft as such. These improved functions are flexibility with cargo placement; reduced concerns as regards stalling; good maneuverability and stability in difficult flying conditions; redundant aerodynamic devices in many places that also provide more safety; lower angle of attack as well as reduced speed and less engine power with less noise at takeoff and landing; etc. The invention also makes it possible to build very large, extended aircraft with a manageable wingspan where the distributed load on the three relatively short box wings allows using more composite materials in the wings that are still thin and strong.

### BRIEF DESCRIPTION OF THE DRAWINGS

FIG. 1 is a top view illustration of the monoplane wing concept.
FIG. 2 is a top view illustration of the regular, conventional box wing concept.
FIG. 3 is a top view illustration of an extended fuselage with regular, conventional box wings, when maximal horizontal separation is obtained.
FIG. 4 is a top view illustration of an extended fuselage with angled front and angled rear wing sections in a box wing configuration, when maximal horizontal separation is obtained.
FIG. 5 is a top view illustration of angled front and angled rear wing sections in a box wing configuration; embodiment with short wingspan and a simple middle wing.
FIG. 6 is a top view illustration of angled front and angled rear wing sections in a box wing configuration; embodiment with short wingspan and a middle wing with two tip sections.
FIG. 7 is an enlarged partial perspective view of an embodiment where the root section of the middle wing is connected to the forward swept and the backward swept tip sections.
FIG. 8 is a front elevation view of an embodiment where the middle wing has two tip sections and the rear wings are supported by a vertical stabilizer.
FIG. 9 is a front elevation view of an embodiment where the middle wing has two tip sections and the rear wings are supported by V-tail fins.
FIG. 10 is a perspective view of an embodiment of the invention with combined propulsion.
FIG. 11 is a front elevation view of the aircraft of FIG. 10.
FIG. 12 is a side elevation view of the aircraft of FIG. 10; the right and left side views are mirror images.
FIG. 13 is a top plane view of the aircraft of FIG. 10.
FIG. 14 is a rear elevation view of the aircraft of FIG. 10.
FIG. 15 is a bottom plane view of the aircraft of FIG. 10.
FIG. 16 is a perspective view illustration of an Airport Shuttle Vehicle for embarking and disembarking a box wing aircraft, with the passenger cabin in elevated position.

### DETAILED DESCRIPTION OF THE INVENTION

Referring now to the drawings, most of the embodiments show a large airliner or cargo plane. The present invention is in no way limited to this type of aircraft; it is applicable to any aircraft of any size, any purpose and application; manned or unmanned; and with any type of propulsion or combination of different propulsion systems for different flying conditions, without any limit as regards speed, altitude or function. The scope of the invention is not limited by materials. Any materials can be used allowing the construction and operation of the invention. Airfoils and other details of the embodiment and structure are established in a way that will be understood by those skilled in the art. Throughout the drawings, the symmetric aircraft parts, one positioned on one side of the fuselage and another on the opposite side, are provided with only one particular reference numeral when it is clear that the numbered item has an identical mirrored counterpart.

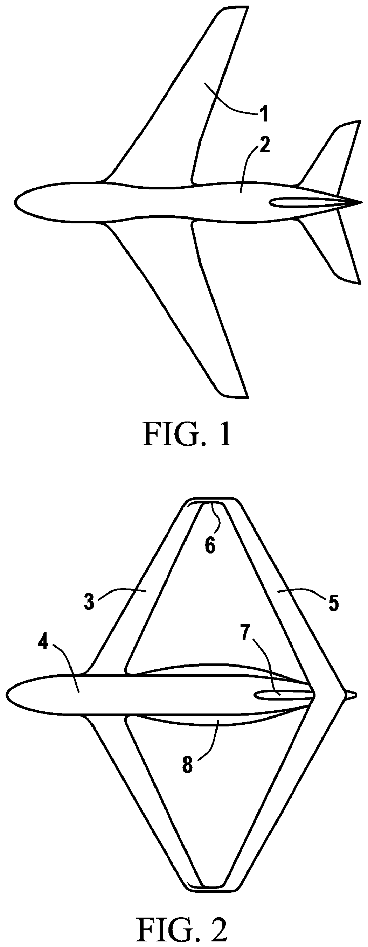

FIG. **1** is a top view illustration of the regular monoplane concept of today's civilian aircraft, for comparisons with FIG. **2****,** which is a basic illustration of the regular, conventional box wing concept of an aircraft with the same overall length. The regular monoplane has one pair of backward swept wings **1,** mounted to the fuselage **2.**

FIG. **2** is a top view illustration of the basic box wing configuration of the prior art, comprising a pair of backward swept front wings **3,** mounted to the lower part of the fuselage **4;** a pair of forward swept rear wings **5** and a wingtip fence **6** which is a structural interconnecting vertical fin between the wingtips. The above backward swept front wings **3** and forward swept rear wings **5** describe wings wherein the leading edges and the trailing edges are straight lines, as they are depicted in FIG. **2****.** In this sense, the wing is "straight", in its spanwise direction. The roots of the two rear wings **5** are joined together and connected to the fuselage **4** with a vertical stabilizer fin **7,** in a typical embodiment. There are different embodiments in the field of the prior art but one common feature is that the distance between the front part of the front wing **3** and the rear part of the rear wing **5** is smaller, or significantly smaller, than the length of the fuselage **4.**

The monoplane wing area is basically the same as the total wing area of the box wing aircraft, if the same weight must be lifted. When inventors and manufacturers design their modem box wing aircraft, they use narrow wings, for aerodynamic reasons, and their wingspan is not significantly different from the wingspan of the monoplane they want to compete with.

FIG. **1** also indicates one application of the area rule design principle for monoplanes, namely making the fuselage **2** thinner where the cross-sectional area of the wings is largest. The corresponding area rule solution for a box wing aircraft is to make the fuselage **4** wider between the wings because the cross-sectional area of the wings is smallest at midway between the front wing **3** and the rear wing **5.** The fuselage of the box wing aircraft **4** is therefore provided with a wide belly extension **8,** as it is shown in FIG. **2****.**

A significant conceptual difference between the monoplane and the box wing concept is that the large wing volume of a monoplane is generally used to contain large fuel tanks while the thin box wings cannot hold a lot of fuel, and therefore, the wide belly extension **8** of the fuselage **4** is suitable as a fuel tank.

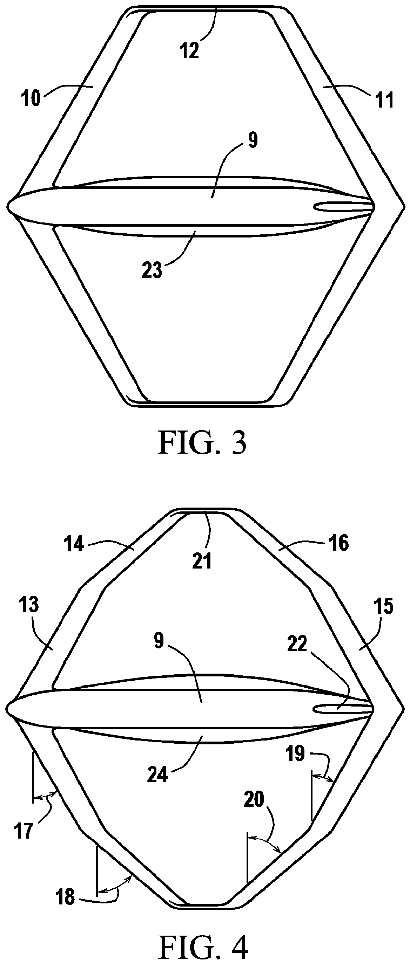

FIG. **3** is an illustration of a box wing aircraft applied to a longer fuselage **9** where the front wing **10** is located as front as possible and the rear wing **11** is located as rear as possible. The reasons for moving the front wing **10** and the rear wing **11** as far from each other as possible are to achieve good horizontal separation between the wings; to obtain lifting forces as close to the front, and respectively, as close to the rear as possible; as well as to have aerodynamic devices, stabilizing functions and maneuverability as far from the center of gravity as possible, and thereby reducing cargo placement issues, reducing the risk for stall and increasing safety. The prior art does not prioritize this idea, because visibility in front is more important to manufacturers.

The long fuselage **9** in FIG. **3** and the location of the front and rear wings, **10** and **11,** provide very good horizontal separation between the wings, but the disadvantage is that the wingtips are too far away from each other, needing a very long, and thereby weak, connecting wingtip fence **12.**

The solution provided by the present invention is shown in FIG. **4****,** namely a division of the front wing into a root section **13** and a tip section **14,** as well as a division of the rear wing into a root section **15** and a tip section **16.** The root and the tip sections are differently swept. The root of the root section **13** of the backward swept front wing joins the fuselage **9** near the lower part of the nose. This root section **13** is dihedral and slightly tapered. The wingtip of the root section **13** of the front wing joins the root of the tip section **14** of the front wing. This tip section **14** is also slightly tapered and dihedral, but more dihedral than the root section **13.**

In the embodiment shown in FIG. **4****,** the root section **13** of the backward swept front wing has a sweep angle **17** similar to that of a modem airliner. This sweep angle **17** is smaller than the sweep angle **18** of the backward swept tip section **14** of the front wing. The root section **15** of the forward swept rear wing has basically the same sweep angle **19** as the sweep angle **17** of the root section **13** of the front wing, but this angle **19** is a forward sweep angle. This sweep angle **19** is smaller than the sweep angle **20** of the forward swept tip section **16** of the rear wing. Thereby the wingtip fence **21** is shorter, and stronger, compared to the wingtip fence **12** of the prior art, when the box wings **10** and **11,** having straight leading edges, are longitudinally well separated, as shown in FIG. **3****.**

The root of the root section **15** of the forward swept rear wing, in FIG. **4****,** is elevated above the aft part of the fuselage **9.** In one embodiment, this root section **15** of the rear wing is connected to the aft part of the fuselage **9** with a vertical stabilizer **22.** The root section **15** of the forward swept rear wing is slightly tapered and basically horizontal. The wingtip of the root section **15** of the rear wing joins the root of the tip section **16** of the rear wing. This tip section **16** is slightly tapered and slightly anhedral.

The wingtip of the backward swept tip section **14** of the front wing and the wingtip of the forward swept tip section **16** of the rear wing are structurally connected with a wingtip fence **21,** which is a non-tapered, backward swept non-lifting side wing. The lower front end of this wingtip fence **21** is joined to the wingtip of the tip section **14** of the front wing and its higher rear end is joined to the wingtip of the tip section **16** of the rear wing. All the structural connections between the parts of the present invention are established in a way which is understood by those skilled in the art.

Having a front wing **10** as front as possible and the rear wing **11** as rear as possible as in FIG. **3** results in a need for a longer wide-belly fuselage extension part **23,** compared to the length of the wide-belly fuselage extension **8** in FIG. **2****,** if the area rule design method is to be applied. When the front wing sections **13** and **14** are angled, as well as the rear wing sections **15** and **16** in FIG. **4****,** the wide-belly section **24** need to be even wider in the middle, if the area rule design method is to be applied. Designing a wider belly section of the fuselage, using the area rule method, with reference to **8** in FIG. **2****, 23** in FIG. **3** and **24** in FIG. **4****,** is not limited to how wide the belly part is but rather more generally applies to a larger cross-sectional area of the fuselage.

Thereby, each of the method steps of (i) extending the length of the fuselage; (ii) moving the front and rear wings longitudinally as far as possible from each other; as well as (iii) introducing angled front and angled rear wings, contributes to obtaining a large fuel tank in the fuselage belly extension, which can contain enough fuel for long range flights. At the same time, the angled front and rear wings shorten the wingtip fence **21,** as shown in FIG. **4****,** compared to the disadvantageously long wingtip fence **12,** shown in FIG. **3****,** which is the result when the front and rear wings, **10** and **11** respectively, have basically unchanged sweep angle from root to tip. But the wingspan problem with a really large aircraft still remains.

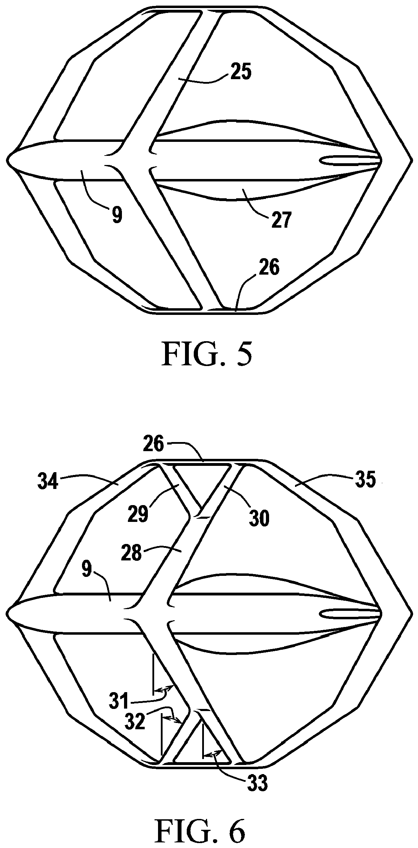

The solution is to introduce a middle wing **25,** as shown in FIG. **5****.** The same total wing area as in FIG. **4** can be achieved by three pairs of narrow wings which are shorter, as shown in FIG. **5****.** The wingspan is reduced by approximately one third.

This simple middle wing **25** in FIG. **5** is very similar to a regular wing of a monoplane aircraft but it does not have to be as massive because the load per wing is lower, the wing **25** is shorter, and the wingtip of this middle wing **25** is joined to the wingtip fence **26,** gaining an advantage from the well-known strength and stiffness of the box wing concept. This reinforcement effect is mutual. The wingtip fence **26** in FIG. **5** is supported by this middle wing **25** as well, reducing bending, torsion and vibration on the wingtip fence **26.**

The root of the middle wing **25** in FIG. **5** is mounted to the upper middle part of the fuselage **9.** This middle wing **25,** as swept and as tapered as shown in FIG. **5** is only one embodiment but the shape is not limited to the planform shown. However, a swept middle wing is preferable because, among other reasons, the wide-belly extension **27** of the fuselage **9** is still large enough as a fuel tank, using the area rule design method.

An even more preferable embodiment of a middle wing is shown in FIG. **6****,** where the middle wing is divided into a backward swept root section **28** and two tip sections, one forward swept **29** and one backward swept **30.** The root section **28** of the middle wing is slightly tapered, basically horizontal or slightly anhedral. The tip sections **29** and **30** are slightly tapered.

In the preferred embodiment shown in FIG. **6****,** the backward sweep angle **31** of the root section **28** of the middle wing is basically the same as the forward sweep angle **32** of the forward swept tip section **29** of the middle wing, as well as the backward sweep angle **33** of the backward swept tip section **30** of the middle wing. These sweep angles, **31, 32** and **33,** are basically the same as the sweep angle of the wing of a modern monoplane airliner.

The wingtip of the forward swept tip section **29** of the middle wing in FIG. **6** joins the wingtip fence **26** vertically above and horizontally behind the wingtip of the tip section **34** of the front wing. The wingtip of the backward swept tip section **30** of the middle wing joins the wingtip fence **26** vertically below and horizontally ahead the wingtip of the tip section **35** of the rear wing. The structural connection between the wingtip fence **26** and the two tip sections, **29** and **30,** of the middle wing, is not limited to this particular embodiment. Using streamlined longitudinal aerodynamic bodies as structural interconnecting parts where the wingtips are connected to the wingtip fence **26,** or other different structures, established in a manner which is understood by those skilled in the art, do not depart from the scope of this invention.

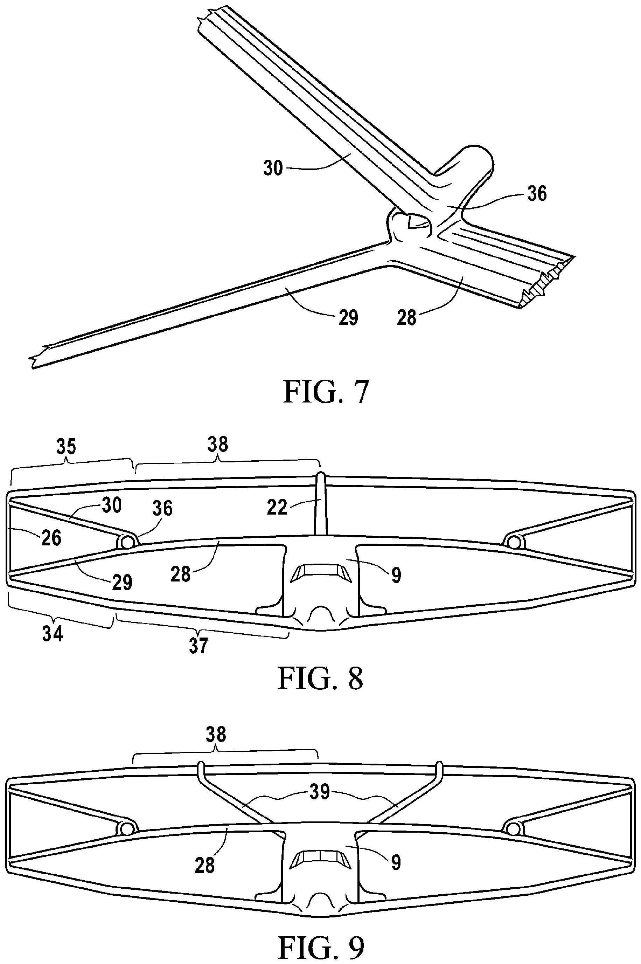

The root of the root section **28** of the middle wing in FIG. **6** joins the upper part of the fuselage **9.** The preferred embodiment where the root section **28** of the middle wing joins the root of the forward swept tip section **29** of the middle wing as well as the root of the backward swept tip section **30** of the middle wing is shown in FIG. **7****,** in a partial, perspective view. Other embodiments having different structures do not depart from the scope of this invention.

The root chords of the tip sections **29** and **30** in the preferred embodiment shown in FIG. 7 have basically the same length and this chord length is smaller than the wingtip chord of the root section **28** of the middle wing. Furthermore, the root of the backward swept tip section **30** of the middle wing is vertically elevated and horizontally located further back, compared to the root of the forward swept tip section **29** of the middle wing.

The reason for this solution, in this particular embodiment shown in FIG. **7****,** is to obtain a vertical and horizontal separation between the two root chords of the tip sections, **29** and **30.** At the same time, the larger chord for the wingtip of the root section **28** of the middle wing makes this root section **28** of the middle wing, by definition, stronger, which is strongly recommended because this root section **28** is a suitable place for locating engines or any other kind of propulsion with large forces on the wing structure.

The embodiment in FIG. **7** shows an elevated backward swept tip section **30,** elevated above the tip section **29** and the root section **28,** that are joined on the same, lower vertical level. The structural distance bridge in this embodiment is an embedded, structurally integrated engine housing **36.**

FIG. **8** shows the same embodiment of the invention. The forward swept tip section **29** of the middle wing is anhedral, basically as much as the tip section **34** of the front wing is dihedral. And, the forward swept tip section **29** of the middle wing is basically as much anhedral as the backward swept tip section **30** of the middle wing is dihedral. Other embodiments having different structures do not depart from the scope of this invention.

FIG. **8****,** compared to FIG. **2****,** clearly shows the structural difference between the regular, conventional box wing concept and the present invention. While the closed frame structure of the prior art is formed by the front wing **3,** the rear wing **5,** the connecting wingtip fence **6,** the vertical stabilizer **7** and the fuselage **4** in FIG. **2****,** the embodiment of the invention in FIG. **8** has three times more closed frames, which is a considerable structural reinforcement.

One closed frame in FIG. **8** is formed by the root and tip sections, **37** and **34,** of the front wing, a small portion of the wingtip fence **26,** the anhedral forward swept tip section **29** of the middle wing, the root section **28** of the middle wing and the fuselage **9.** Another closed frame in the same FIG. **8** is formed by the vertical stabilizer **22,** the root section **38** and the tip section **35** of the rear wing, a small portion of the wingtip fence **26,** the dihedral backward swept tip section **30** of the middle wing, the structural bridge **36,** the root section **28** of the middle wing and the fuselage **9.** The third closed frame is formed by the wingtip fence **26,** the forward swept **29** and backward swept **30** tip sections of the middle wing, and the structural bridge **36.** The other half of the embodiment, the mirror image, has also three closed frames.

FIG. **9** shows a modified and preferred embodiment with two symmetric tail fins **39** in a V-tail configuration, instead of the single stabilizer **22** shown in FIG. **8****.** The two V-tail fins **39** in FIG. **9** together with portions of both root sections **38** of the rear wings and the aft portion of the fuselage **9** form one more closed frame, compared to the number of frames in FIG. **8****.** The total number of closed frames of the embodiment in FIG. **9** is seven, and this feature of the invention provides exceptional structural strength and stiffness for this new box wing configuration.

The main part of the airflow around the aircraft of the present invention is forced to go through these frames, formed by the wing sections and other structural parts of the aircraft. The stream flow is divided into seven aerodynamic channels at the most, as shown in FIG. **9****.** This novel feature of the present invention provides substantial aerodynamic improvement.

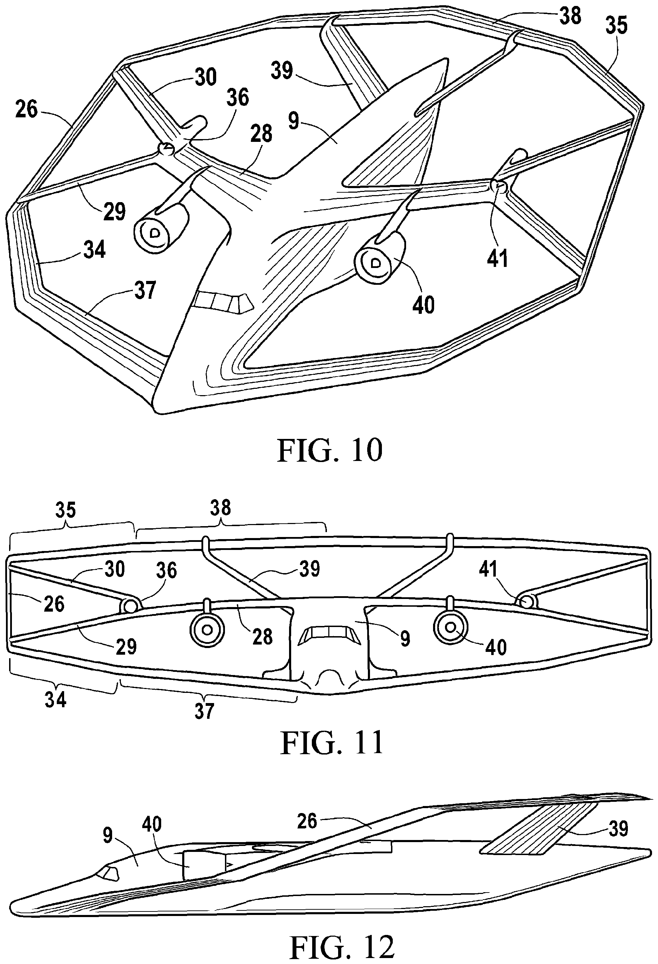

As was mentioned, the box wing aircraft configuration implicitly disclosed in RCD EM 002544510-0001 is not functional. All four engines are Ramj et-type and they cannot lift the aircraft from the runway because they need an established airflow of several hundred km/h to start. FIG. **10** shows the solution which makes the aircraft EM 002544510-0001 functional. The two inner engines, **40** on both sides, are traditional gas turbine engines in the present invention, preferably turbofan or turboprop, which can provide the necessary airflow needed for the two outer, Ramjet-type, engines, **41** on both sides, to start after liftoff.

The propulsion for the box wing aircraft of the present invention shown in FIG. **10** is not limited to turboprop, turbofan and Ramjet-type engines. Having other kind of propulsion systems and a combination of different propulsion systems, as well as distributed propulsion, do not depart from the scope of this invention.

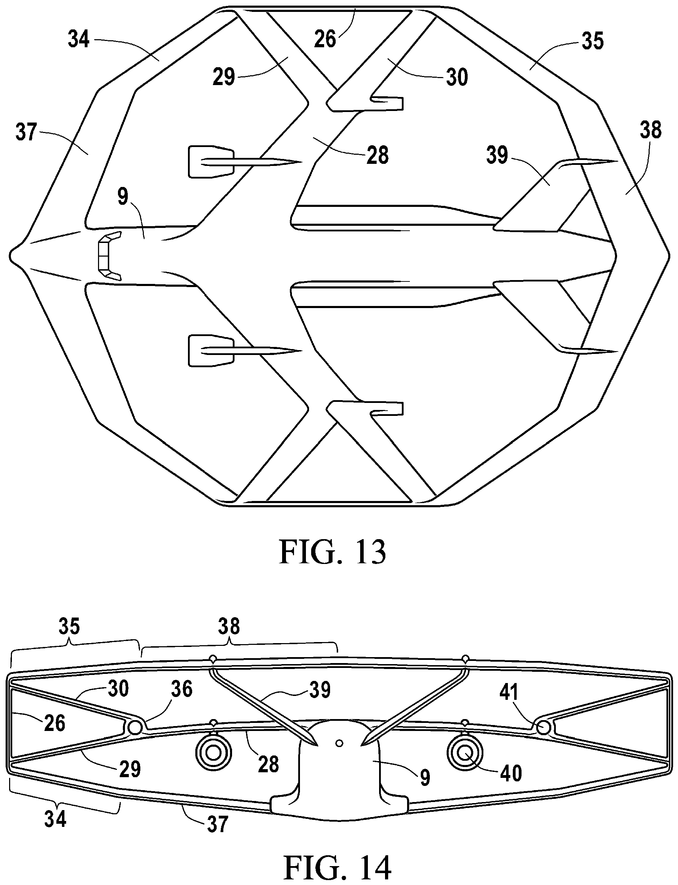

FIG. **11** to FIG. **15** are different views of the aircraft of FIG. **10****,** which is the perspective view of the preferred embodiment of the present invention, with combined propulsion. The front and rear views, FIG. **11** and FIG. **14****,** are shown in enlarged scale, compared to dimensions of the side, top and bottom views, FIG. **12****,** **13** and **15** respectively.

The box wing aircraft concept cannot be accepted for passenger traffic before a solution for convenient embarking and disembarking is presented. Airport boarding bridges cannot come close enough to the passenger door especially when the front wing is attached to the nose, as in the present invention. However, it is not a law of nature that we must use boarding bridges for embarking and disembarking. Very large passenger aircraft are desired and the boarding bridges are a bottleneck, box wing aircraft or not.

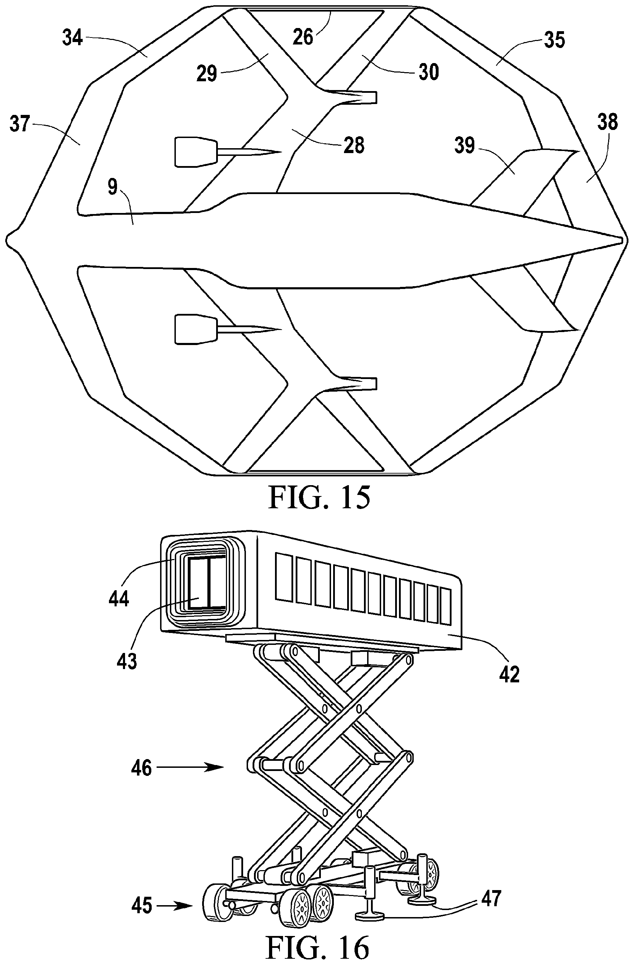

FIG. **16** shows an Airport Shuttle Vehicle, for quick embarking-disembarking, designed with the box wing aircraft concept in mind, comprising a passenger cabin **42** with front and rear doors **43** with a surrounding frame **44,** able to absorb shocks when the cabin door **43** docks to a passenger door of the aircraft or to a door of the airport terminal building; an undercarriage **45** including but not limited to a scissor mechanism **46** for lifting the cabin **42;** at least one foldable or expandable side support leg **47** on each side, for stability and safety reasons; and necessary sensors and equipment to operate the vehicle. FIG. **16** shows the passenger cabin **42** in elevated position and the side support legs **47** expanded.

The passenger doors of the box wing aircraft must be located in positions easily accessible for docking with such Airport Shuttle Vehicles; preferably several vehicles simultaneously docked to each passenger deck on both sides of the aircraft. Embarking and disembarking can be quick even for a large box wing airliner with more than thousand passengers, using a fleet of shuttle vehicles. Such an Airport Shuttle Vehicle has simple tasks in a controlled environment which means great opportunity for unmanned, adaptive preprogrammed operation under limited human supervision.

There are similar existing mobile passenger lounges, although without side support legs; as well as catering and cargo load vehicles, with side support legs but without passenger cabins. The patentability of this particular Airport Shuttle Vehicle is therefore limited, but this enhanced large-scale embarking-disembarking system is worth mentioning as an effort to eliminate one of the shortcomings of the box wing concept for large airliners.

## Claims

1. Method for improving the regular, conventional box wing aircraft concept, comprising a fuselage **(4),** a pair of straight backward swept front wings **(3),** a pair of straight forward swept rear wings **(5)** and a wingtip fence **(6)** on each side as a structural connecting part between the wingtips, wherein the method comprises the design steps of:
a) dividing the said backward swept front wings **(3)** of the regular, conventional box wing aircraft configuration into root sections **(13** or **37)** and tip sections **(14** or **34),** wherein the tip sections **(14** or **34)** are more backward swept than the root sections **(13** or **37),** wherein the leading edge of the tip section is more backward swept than the leading edge of the root section;
b) dividing the said forward swept rear wings **(5)** of the regular, conventional box wing aircraft configuration into root sections **(15** or **38)** and tip sections **(16** or **35),** wherein the tip sections **(16** or **35)** are more forward swept than the root sections **(15** or **38),** wherein the trailing edge of the tip section is more forward swept than the trailing edge of the root section;
and a step of fabricating the improved box wing aircraft.

2. The method of Claim **1,** further comprising the step of adding a pair of middle wings extending from the fuselage, horizontally and vertically located between the front wings and the rear wings, wherein each middle wing is divided into a backward swept root section **(28)** and two tip sections, wherein
a) one tip section is forward swept **(29)** and anhedral, another tip section is backward swept **(30)** and dihedral;
b) the roots of both tip sections **(29** and **30)** are structurally connected to the wingtip of the said root section **(28);**
c) the wingtip of the forward swept tip section **(29)** is joined to the lower front part of the wingtip fence **(26),** wherein said wingtip fence is a side wing for structural interconnection of the wingtips;
d) the wingtip of the backward swept tip section **(30)** of the middle wing is joined to the upper aft part of the said wingtip fence **(26).**

3. A manned or unmanned aircraft comprising:
a) a tubular or elliptical fuselage **(9),** having a longitudinal axis;
b) a pair of backward swept front wings attached to the front bottom of the fuselage (9), each of these wings comprising
(i) a root section **(37),** which is the inboard section, closest to the fuselage **(9),** joined to the front bottom of the fuselage **(9),** having a dihedral angle between 0 and 15 degrees, and having a taper ratio between 1: 1 and 1:3;
(ii) a tip section **(34),** joined to the root section **(37),** having a taper ratio between 1: 1 and 1:3, and a larger dihedral angle than the root section **(37),** more backward swept than the root section **(37);**
c) a pair of forward swept rear wings in an elevated position compared to the front wings, structurally connected to the upper aft part of the fuselage **(9),** each of these wings comprising
(i) a root section **(38),** which is the inboard section, closest to the fuselage **(9),** horizontal, having a taper ratio between 1: 1 and 1:3;
(ii) a tip section **(35),** joined to the root section **(38),** having a negative dihedral - anhedral - angle between 0 and 30 degrees, having a taper ratio between 1: 1 and 1:3, more forward swept than the root section **(38);**
d) a wingtip fence **(26)** on each side of the aircraft, which is a backward swept, non-tapered, vertical side wing, having a symmetrical airfoil, a leading edge, a trailing edge and two surfaces, connecting the wingtip of the tip section **(34)** of the backward swept front wing and the wingtip of the tip section **(35)** of the forward swept rear wing.

4. The aircraft of Claim **3,** wherein the root section **(38)** of each rear wing is attached to the upper aft part of the fuselage **(9)** on respective side.

5. The aircraft of Claim **3,** wherein the root sections **(38)** of the two rear wings are joined together above the aft part of the fuselage **(9),** and the structural connection between the fuselage **(9)** and the elevated rear wings is established by using at least one stabilizer **(22),** which is a backward swept tail fin extending from the upper aft part of the fuselage **(9).**

6. The aircraft of Claim **3,** wherein the root sections **(38)** of the two rear wings are joined together above the aft part of the fuselage **(9),** and the structural connection between the fuselage **(9)** and the elevated rear wings is established by using a V-tail configuration, namely two backward swept tail fins **(39)** extending from the upper aft part of the fuselage **(9),** having an angle between them in the range 45 to 137.5 degrees.

7. The aircraft of Claim **3,** further comprising a pair of backward swept middle wings **(25),** horizontally and vertically located between the front and rear wings, wherein each of the roots of these middle wings **(25)** is attached to the fuselage **(9),** and the tip of each of these middle wings **(25)** is joined to the respective wingtip fence **(26),** between the wingtips of the tip sections **(34, 35)** of the front and rear wings.

8. The aircraft of Claim **3,** further comprising a pair of middle wings, horizontally and vertically located between the front and rear wings, each of these middle wings comprising:
a) a backward swept root section **(28),** which is the inboard section, extending from the fuselage **(9),** horizontal or having a negative dihedral - anhedral - angle between 0 and 15 degrees;
b) a forward swept, anhedral tip section **(29),** with its root joined to the wingtip of the said root section **(28)** of the middle wing and with its wingtip joined to the lower front portion of the wingtip fence **(26);**
c) a backward swept, dihedral tip section **(30),** elevated above the said forward swept tip section **(29)** and with its wingtip joined to the upper aft portion of the wingtip fence **(26);**
d) a structural connecting part **(36),** for smooth bridging of the vertical distance between
i) the joined forward swept tip section **(29)** and the backward swept root section **(28)** of the middle wing, and
ii) the root of the backward swept tip section **(30)** of the middle wing which is located at an elevated vertical level, elevated above the root of the said forward swept tip section **(29);**
wherein said structural bridging part **(36)** is preferably but not exclusively a portion of an engine housing, at a lower vertical level structurally integrated with the forward swept tip section **(29)** and the backward swept root section **(28),** and also integrated, at an elevated level, with the root portion of the backward swept tip section **(30)** of the middle wing.

9. Method for improving the regular, conventional box wing aircraft concept, comprising a fuselage **(4),** a pair of straight backward swept front wings **(3),** a pair of straight forward swept rear wings **(5)** and a wingtip fence **(6)** on each side as a structural connecting part between the wingtips, wherein the method comprises the design steps of:
a) adding a pair of middle wings extending from the fuselage, horizontally and vertically located between the front wings and the rear wings, wherein each middle wing is divided into a backward swept root section **(28)** and two tip sections, wherein
(i) one tip section is forward swept **(29)** and anhedral, another tip section is backward swept **(30)** and dihedral;
(ii) the roots of both tip sections **(29** and **30)** are structurally connected to the wingtip of the said root section **(28);**
(iii) the wingtip of the forward swept tip section **(29)** is joined to the lower front part of the said wingtip fence **(26),** which is a vertical side wing for structural interconnection of the wingtips;
(iv) the wingtip of the backward swept tip section **(30)** of the middle wing is joined to the upper aft part of the said wingtip fence **(26);**
b) dividing at least one of the two pairs of wings of the regular, conventional box wing aircraft configuration, namely the front wings **(3)** or the rear wings **(5),** wherein said dividing comprises at least one of the design steps of
(i) dividing the backward swept front wings **(3)** of the regular, conventional box wing aircraft configuration into root sections **(13** or **37)** and tip sections **(14** or **34),** wherein the tip sections **(14** or **34)** are more backward swept than the root sections **(13** or **37);**
(ii) dividing the forward swept rear wings **(5)** of the regular, conventional box wing aircraft configuration into root sections **(15** or **38)** and tip sections **(16** or **35),** wherein the tip sections **(16** or **35)** are more forward swept than the root sections **(15** or **38);**
and a step of fabricating the improved box wing aircraft.

10. The aircraft of any one of Claim **3** to Claim **8,** further comprising:
a) a plurality of engines mounted to the aircraft parts with or without additional structural interconnecting parts, or integrated with the structure of the aircraft parts, with no limit to only one type of engine and no limit to only one kind of propulsion system but also a combination of different types of engines and different propulsion methods;
b) a plurality of aerodynamic devices attached to at least one of the wing sections, also including the wingtip fences **(26)** and the fins **(22, 39).**

## Patentansprüche

1. Verfahren zur Verbesserung des normalen, herkömmlichen Boxwing-Flugzeugkonzeptes umfasst einen Rumpf **(4),** ein Paar gerader, positiv gepfeilter Vorderflügel **(3),** ein Paar gerader, negativ gepfeilter Heckflügel **(5)** und einen Flügelspitzenzaun **(6)** auf jeder Seite als strukturelles Verbindungsteil zwischen den Flügelspitzen, wobei das Verfahren die folgenden Konstruktionsschritte umfasst:
a) Unterteilung der besagten positiv gepfeilten Vorderflügel **(3)** des normalen, herkömmlichen Boxwing-Flugzeugkonfiguration in Wurzelabschnitte **(13,** oder **37)** und Spitzenabschnitte **(14,** oder **34),** wobei die Spitzenabschnitte **(14,** oder **34)** stärker positiv gepfeilt sind als die Wurzelabschnitte **(13,** oder **37),** wobei die Vorderkante des Spitzenabschnitts stärker positiv gepfeilt ist als die Vorderkante des Wurzelabschnitts;
b) Unterteilung der besagten negativ gepfeilten Heckflügel **(5)** des normalen, herkömmlichen Boxwing-Flugzeugkonfiguration in Wurzelabschnitte **(15** oder **38)** und Spitzenabschnitte **(16** oder **35),** wobei die Spitzenabschnitte **(16** oder **35)** stärker negativ gepfeilt sind als die Wurzelabschnitte **(15** oder **38),** wobei die Hinterkante des Spitzenabschnitts stärker negativ gepfeilt ist als die Hinterkante des Wurzelabschnitts;
und einen Schritt zur Herstellung des verbesserten Boxwing-Flugzeuges.

2. Das Verfahren nach Anspruch **1,** das ferner den Schritt des Hinzufügens eines Paar Mittelflügel umfasst, die sich vom Rumpf aus erstrecken und horizontal und vertikal zwischen den Vorderflügeln und den Heckflügeln angeordnet sind, wobei jeder Mittelflügel in einen positiv gepfeilten Wurzelabschnitt **(28)** und in zwei Spitzenabschnitte geteilt ist, wobei
a) ein Spitzenabschnitt negativ gepfeilt ist **(29)** und anhedral, der andere Spitzenabschnitt ist positiv gepfeilt **(30)** und dihedral;
b) die Wurzeln der beiden Spitzenabschnitte **(29** und **30)** strukturell mit der Flügelspitze des besagten Wurzelabschnitts **(28)** verbunden sind;
c) die Flügelspitze des negativ gepfeilten Spitzenabschnitts **(29)** mit dem unteren vorderen Teil des Flügelspitzentzauns **(26)** verbunden ist, wobei genannter Flügelspitzentzaun ein Seitenflügel zur strukturellen Verbindung der Flügelspitzen ist;
d) die Flügelspitze des positiv gepfeilten Spitzenabschnitte **(30)** des Mittelflügels mit dem oberen hinteren Teil des besagten Flügelspitzenzaun **(26)** verbunden ist.

3. Ein bemanntes, oder unbemanntes Luftfahrzeug umfassend:
a) einem röhrenförmigen oder elliptischen Rumpf **(9)** mit einer Längsachse;
b) ein Paar positiv gepfeilte Vorderflügel die an der vorderen Unterseite des Rumpfes (9) befestigt sind, jeder dieser Flügel umfasst
(i) einen Wurzelabschnitt **(37),** der der dem Rumpf **(9)** am nächsten liegende innere Abschnitt ist, der mit dem vorderen Boden des Rumpfes **(9)** verbunden ist, einen Diederwinkel zwischen 0 und 15 Grad und ein Verjüngungsverhältnis zwischen 1:1 und 1:3 aufweist;
(ii) einen Spitzenabschnitt **(34),** der mit dem Wurzelabschnitt **(37)** verbunden ist und ein Verjüngungsverhältnis zwischen 1:1 und 1:3 sowie einen größeren positiven Diederwinkel als der Wurzelabschnitt **(37)** aufweist, der stärker positiv gepfeilt ist als der Wurzelabschnitt **(37);**
c) ein Paar negativ gepfeilter Heckflügel, die im Vergleich zu den Vorderflügeln erhöht angeordnet und strukturell mit dem oberen hinteren Teil des Rumpfes **(9)** verbunden sind, wobei jeder dieser Flügel Folgendes umfasst
(i) einen Wurzelabschnitt **(38),** der der dem Rumpf **(9)** am nächsten liegende, horizontale Innenabschnitt ist und ein Kegelverhältnis zwischen 1:1 und 1:3 aufweist;
(ii) einen Spitzenabschnitt **(35),** der mit dem Wurzelabschnitt **(38)** verbunden ist, einen negativen Diederwinkel - Anhedralwinkel - zwischen 0 und 30 Grad aufweist, ein Verjüngungsverhältnis zwischen 1:1 und 1:3 hat und stärker negativ gepfeilt ist als der Wurzelabschnitt **(38);**
d) einen Flügelspitzenzaun **(26)** auf jeder Seite des Flugzeugs, der ein positiv gepfeilter, nicht verjüngter, vertikaler Seitenflügel ist, mit einem symmetrischen Profil, einer Vorderkante, einer Hinterkante und zwei Flächen, die die Flügelspitze des Spitzenabschnitts **(34)** des positiv gepfeilten Vorderflügels und die Flügelspitze des Spitzenabschnitts **(35)** des negativ gepfeilten Heckflügels verbinden.

4. Das Flugzeug nach Anspruch **3,** bei dem der Wurzelabschnitt **(38)** jedes Heckflügels an den oberen hinteren Teil des Rumpfes **(9)** auf der jeweiligen Seite befestigt ist.

5. Das Flugzeug nach Anspruch **3,** wobei die Wurzelabschnitte **(38)** der beiden Heckflügel über dem hinteren Teil des Rumpfes **(9)** zusammengefügt sind, und die strukturelle Verbindung zwischen dem Rumpf **(9)** und den hochgezogenen Heckflügeln durch Verwendung mindestens eines Stabilisators **(22)** hergestellt wird, der eine Heckflosse ist, die sich von dem oberen hinteren Teil des Rumpfes **(9)** aus positiv gepfeilt erstreckt.

6. Das Flugzeug nach Anspruch **3,** wobei die Wurzelabschnitte **(38)** der beiden Heckflügel über dem hinteren Teil des Rumpfes **(9)** zusammengefügt sind und die strukturelle Verbindung zwischen dem Rumpf **(9)** und den hochgezogenen Heckflügeln durch Verwendung einer V-Leitwerkskonfiguration hergestellt wird, nämlich zwei positiv gepfeilter Heckflossen **(39),** die sich vom oberen hinteren Teil des Rumpfes **(9)** aus erstrecken und einen Winkel zwischen ihnen im Bereich von 45 bis 137,5 Grad aufweisen.

7. Das Flugzeug nach Anspruch **3,** das ferner ein Paar positiv gepfeilte Mittelflügel **(25)** umfasst die horizontal und vertikal zwischen den Vorder- und Heckflügeln angeordnet sind, wobei die Wurzeln dieser Mittelflügel **(25)** am Rumpf **(9)** befestigt sind und die Spitze jedes dieser Mittelflügel **(25)** mit dem jeweiligen Flügelspitzenzaun **(26)** zwischen den Flügelspitzen der Spitzenabschnitte **(34, 35)** des Vorder- und Heckflügels verbunden ist.

8. Das Flugzeug nach Anspruch **3,** das ferner ein Paar Mittelflügel umfasst, die horizontal und vertikal zwischen den Vorder- und Heckflügeln angeordnet sind, wobei jeder dieser Mittelflügel umfasst:
a) einen positiv gepfeilten Wurzelabschnitt **(28),** der innere Abschnitt, der sich vom Rumpf **(9)** erstreckt, horizontal ist oder einen negativen Diederwinkel - Anhedralwinkel - zwischen 0 und 15 Grad aufweist;
b) einen negativ gepfeilten, anhedral Spitzenabschnitt **(29),** dessen Wurzel mit der Flügelspitze des besagten Wurzelabschnitts **(28)** des Mittelflügels und dessen Flügelspitze mit dem unteren vorderen Teil des Flügelspitzenzaun **(26)** verbunden ist;
c) einen positiv gepfeilten, dihedral Spitzenabschnitt **(30),** der sich über den negativ gepfeilten Spitzenabschnitt **(29)** erhebt und dessen Flügelspitze mit dem oberen hinteren Teil der Flügelspitzenzaun **(26)** verbunden ist;
d) ein strukturelles Verbindungsteil **(36),** zur reibungslosen Überbrückung des vertikalen Abstands zwischen
(i) dem verbundenen negativ gepfeilten Spitzenabschnitt **(29)** und dem positiv gepfeilten Wurzelabschnitt **(28)** des Mittelflügels, und
(ii) der Wurzel des positiv gepfeilten Spitzenabschnitts **(30)** des Mittelflügels befindet sich auf einer erhöhten vertikalen Ebene, die über der Wurzel des negativ gepfeilten Spitzenabschnitts **(29)** erhöht ist;
wobei das strukturelle Brückenteil **(36)** vorzugsweise, aber nicht ausschließlich, ein Teil eines Triebwerksgehäuses ist, das auf einer unteren vertikalen Ebene strukturell mit dem negativ gepfeilten Spitzenabschnitt **(29)** und dem positiv gepfeilten Wurzelabschnitt **(28)** integriert ist und auch auf einer erhöhten Ebene mit dem Wurzelabschnitt des positiv gepfeilten Spitzenabschnitts **(30)** des mittleren Flügels integriert ist.

9. Verfahren zur Verbesserung des normalen, herkömmlichen Boxwing-Flugzeugkonzeptes umfasst einen Rumpf **(4),** ein Paar gerader, positiv gepfeilter Vorderflügel **(3),** ein Paar gerader, negativ gepfeilter Heckflügel **(5)** und einen Flügelspitzenzaun **(6)** auf jeder Seite als strukturelles Verbindungsteil zwischen den Flügelspitzen, wobei das Verfahren die folgenden Konstruktionsschritte umfasst:
a) Hinzufügen eines Paars Mittelflügel, die sich vom Rumpf aus erstrecken und horizontal und vertikal zwischen den Vorderflügeln und den Heckflügeln angeordnet sind, wobei jeder Mittelflügel in einen nach positiv gepfeilten Wurzelabschnitt **(28)** und zwei Spitzenabschnitte unterteilt ist, wobei
(i) ein Spitzenabschnitt negativ gepfeilt **(29)** und anhedral ist, wobei der andere Spitzenabschnitt positiv gepfeilt **(30)** und dihedral;
(ii) die Wurzeln der beiden Spitzenabschnitte **(29** und **30)** strukturell mit der Flügelspitze des besagten Wurzelabschnitts **(28)** verbunden sind;
(iii) die Flügelspitze des negativ gepfeilten Spitzenabschnitts **(29)** mit dem unteren vorderen Teil des besagten Flügelspitzenzauns **(26)** verbunden ist, das ein vertikaler Seitenflügel zur strukturellen Verbindung der Flügelspitzen ist;
(iv) die Flügelspitze des positiv gepfeilten Spitzenabschnitts **(30)** des Mittelflügels mit dem oberen hinteren Teil des besagten Flügelspitzenzauns **(26)** verbunden ist;
b) Unterteilung mindestens eines der beiden Flügelpaare des normalen, herkömmlichen Boxwing-Flugzeugkonfiguration, nämlich der Vorderflügel **(3)** oder der Heckflügel **(5),** wobei die Unterteilung mindestens einen der folgenden Konstruktionsschritte umfasst
(i) Unterteilung der positiv gepfeilten Vorderflügel **(3)** des normalen, herkömmlichen Boxwing-Flugzeugkonfiguration in Wurzelabschnitte **(13** oder **37)** und Spitzenabschnitte **(14** oder **34),** wobei die Spitzenabschnitte **(14** oder **34)** stärker positiv gepfeilt sind als die Wurzelabschnitte **(13** oder **37);**
(ii) Unterteilung der negativ gepfeilten Heckflügel **(5)** des normalen, herkömmlichen Boxwing-Flugzeugkonfiguration in Wurzelabschnitte **(15** oder **38)** und Spitzenabschnitte **(16** oder **35),** wobei die Spitzenabschnitte **(16** oder **35)** stärker negativ gepfeilt sind als die Wurzelabschnitte **(15** oder **38);**
und einen Schritt zur Herstellung des verbesserten Boxwing-Flugzeuges.

10. Das Flugzeug nach einem der Ansprüche **3** bis **8,** ferner umfassend:
a) eine Vielzahl von Triebwerken, die mit oder ohne zusätzliche strukturelle Verbindungsteile an den Flugzeugteilen angebracht oder in die Struktur der Flugzeugteile integriert sind, wobei keine Beschränkung auf nur einen Triebwerkstyp und keine Beschränkung auf nur eine Art von Antriebssystem, sondern auch eine Kombination verschiedener Triebwerkstypen und verschiedener Antriebsmethoden möglich ist;
b) eine Vielzahl von aerodynamischen Vorrichtungen, die an mindestens einem der Flügelabschnitte angebracht sind und auch die Flügelspitzenzäune **(26)** und die Leitwerke **(22, 39)** umfassen.

## Revendications

1. Procédé pour améliorer l'aile en normale, classique structure caisson d'un aéronef, comprenant un fuselage **(4),** une paire d'ailes avant **(3),** droits et balayées vers l'arrière, une paire d'ailes arrière **(5),** droites et balayées vers l'avant, et une clôture des bouts d'aile **(6)** de chaque côté en tant que partie de liaison structurelle entre les extrémités des ailes, dans lequel le procédé comprend les étapes de conception suivantes:
a) diviser les susnommées ailes avant **(3)** de la conception normale, classique d'aile en structure caisson d'un aéronef en sections à la racine **(13** ou **37)** et en sections à l'extrémité d'aile **(14** ou **34),** avec les sections à l'extrémité d'aile **(14** ou **34)** ayant une flèche arrière plus importante que les sections à la racine **(13** ou **37),** et avec le bord d'attaque de la section à l'extrémité d'aile ayant une flèche arrière plus importante que le bord d'attaque de la section à la racine de l'aile;
b) diviser les susnommées ailes arrière en flèche avant en flèche arrière **(5)** de la conception normale, classique d'aile en structure caisson d'un aéronef en sections à la racine **(15** ou **38)** et en sections à l'extrémité d'aile **(16** ou **35),** avec les sections à l'extrémité d'aile **(16** ou **35)** ayant une flèche avant plus importante que les sections à la racine **(15** ou **38),** et avec le bord de fuite de la section à l'extrémité d'aile ayant une flèche avant plus importante que le bord de fuite de la section à la racine de l'aile;
et une étape de fabrication en structure caisson d'un aéronef amélioré.

2. Le procédé de la revendication 1, comprenant en outre l'étape consistant à ajouter une paire d'ailes centrales s'étendant à partir du fuselage, disposées horizontalement et verticalement entre les ailes avant et les ailes arrière, dans laquelle chaque aile centrale est divisée en une section en flèche arrière à la racine de l'aile **(28)** et deux sections à l'extrémité de l'aile, dans lesquelles:
a) une section à l'extrémité a une flèche avant **(29)** et un dièdre négatif, l'autre section à l'extrémité a une flèche arrière **(30)** et un dièdre positif;
b) les racines des deux sections à l'extrémité **(29** et **30)** sont connectées structurellement à l'extrémité de ladite section à la racine de l'aile **(28);**
c) l'extrémité de la section à l'extrémité en flèche avant **(29)** est j ointe à la partie avant basse de la clôture des extrémités d'aile **(26),** dans laquelle ladite clôture des extrémités d'aile est une aile de côté pour l'interconnection structurelle des extrémités d'aile;
d) l'extrémité de la section à l'extrémité en flèche arrière **(30)** est j ointe à la partie arrière haute de ladite clôture des extrémités d'aile **(26).**

3. Un aéronef habité ou inhabité comprenant:
a) un fuselage tubulaire ou elliptique **(9),** ayant un axe longitudinal;
b) une paire d'ailes avant en flèche arrière fixées au fond avant du fuselage **(9),** chacune de ces ailes comprenant:
(i) une section à la racine **(37),** qui est la section intérieure, la plus proche du fuselage **(9),** reliée au fond avant du fuselage **(9),** ayant un angle dièdre compris entre 0 et 15 degrés et présentant un coefficient d'effilement entre 1: 1 et 1:3;
(ii) une section à l'extrémité **(34),** jointe à la section à la racine **(37),** ayant un coefficient d'effilement compris entre 1:1 et 1:3, et un angle dièdre plus grand que la section à la racine **(37),** à la flèche arrière plus importante que la section à la racine **(37);**
c) une paire d'ailes arrière à flèche avant dans une position surélevée par rapport aux ailes avant, reliées structurellement à la partie arrière supérieure du fuselage **(9),** chacune de ces ailes comprenant:
(i) une section à la racine **(38),** qui est la section intérieure, la plus proche du fuselage **(9),** horizontale, et présente un coefficient d'effilement compris entre 1: 1 et 1:3;
(ii) une section à l'extrémité **(35),** jointe à la section à la racine **(38),** ayant un angle dièdre négatif compris entre 0 et 30 degrés, ayant un coefficient d'effilement compris entre 1:1 et 1:3, à la flèche avant plus importante que la section à la racine **(38);**
d) une clôture des extrémités d'aile **(26)** de chaque côté de l'aéronef, qui est une aile latérale non-effilée à flèche arrière, ayant un profil aérodynamique symmetrical, un bord d'attaque, un bord de fuite et deux surfaces, reliant la section à l'extrémité **(34)** de l'aile avant à flèche arrière et la section à l'extrémité **(35)** de l'aile arrière à flèche avant.

4. L'aéronef selon la revendication **3,** où la section à la racine **(38)** de chaque aile arrière est reliée à la partie arrière supérieure du fuselage **(9)** de chaque côté respectif.

5. L'aéronef selon la revendication **3,** où les sections à la racine **(38)** des deux ailes arrières sont liées ensemble au dessus de la partie arrière du fuselage **(9),** et le lien structurel entre le fuselage **(9)** et les ailes arrières surélevées est établi en utilisant au moins un stabilisateur **(22),** lequel est un aileron de queue à flèche arrière s'étendant à partir de la partie arrière haute du fuselage **(9).**

6. L'aéronef selon la revendication **3,** où les sections à la racine **(38)** des deux ailes arrières sont liées ensemble au dessus de la partie arrière du fuselage **(9),** et le lien structurel entre le fuselage **(9)** et les ailes arrières surélevées est établi en utilisant **(39)** s'étendant à partir de la partie arrière haute du fuselage **(9),** ayant un angle entre eux dans la gamme de 45 à 137.5 degrés.

7. L'aéronef selon la revendication **3,** comprenant en outre une paire d'ailes centrales à flèche arrière **(25),** disposées horizontalement et verticalement entre les ailes avant et arrière, chacune des racines de ces ailes centrales **(25)** étant fixée au fuselage **(9),** et l'extrémité de chacune de ces ailes centrales **(25)** est reliée à la clôture de l'extrémité d'aile respective **(26),** entre les extrémités des sections à l'extrémité **(34, 35)** des ailes avant et arrière.

8. L'aéronef selon la revendication **3,** comprenant en outre une paire d'ailes centrales, disposées horizontalement et verticalement entre les ailes avant et arrière, chacune de ces ailes centrales comprenant:
a) une section à la racine de flèche arrière **(28),** qui est la section interne, s'étendant à partir du fuselage **(9),** horizontale ou ayant un angle dièdre négatif compris entre 0 et 15 degrés;
b) une section à l'extrémité de dièdre négatif et de flèche avant **(29),** dont la racine est jointe à l'extrémité d'aile de ladite section à la racine **(28)** de l'aile médiane et avec son extrémité d'aile jointe à la partie avant inférieure de la clôture des extémités d'aile **(26);**
c) une section à l'extrémité de dièdre positif et de flèche arrière **(30),** élevée au-dessus de ladite section à l'extrémité à flèche avant **(29)** et son extrémité d'aile étant jointe à la partie arrière supérieure de la clôture des extémités d'aile **(26);**
d) une pièce de liaison structurelle **(36),** pour un pontage lisse de la distance verticale entre:
(i) la section à l'extrémité à flèche avant **(29)** jointe à la section à la racine à flèche arrière **(28)** de l'aile médiane, et
(ii) la racine de la section à l'extrémité à flèche arrière **(30)** de l'aile médiane qui est située à un niveau vertical surélevé, élevée au-dessus de la racine de ladite section à l'extrémité à flèche avant **(29);**
dans laquelle ladite pièce structurelle de pontage **(36)** est de préférence, mais non exclusivement, une partie d'un carter de moteur, intégré structurellement à un niveau vertical inférieur à la section à l'extrémité à flèche avant **(29)** et à la section à la racine à flèche arrière **(28),** et aussi intégré, à un niveau surélevé, avec la partie à la racine de la section à l'extrémité de flèche arrière **(30)** de l'aile médiane.

9. Procédé pour améliorer l'aile en normale, classique structure caisson d'un aéronef, comprenant un fuselage **(4),** une paire d'ailes avant **(3),** droits et balayées vers l'arrière, une paire d'ailes arrière **(5),** droites et balayées vers l'avant, et une clôture des bouts d'aile **(6)** de chaque côté en tant que partie de liaison structurelle entre les extrémités des ailes, dans lequel le procédé comprend les étapes de conception suivantes:
a) ajouter une paire d'ailes centrales s'étendant à partir du fuselage, disposées horizontalement et verticalement entre les ailes avant et les ailes arrière, dans laquelle chaque aile médiane est divisée en une section à la racine à flèche arrière **(28)** et deux sections à l'extrémité, dans lesquelles
(i) une section à l'extrémité a une flèche avant **(29)** et un dièdre négatif, l'autre section à l'extrémité a une flèche arrière **(30)** et un dièdre positif;
(ii) les racines des deux sections à l'extrémité **(29** et **30)** sont liées structurellement à l'extrémité de ladite section à la racine **(28);**
(iii) l'extrémité de la section à l'extrémité de flèche avant **(29)** est j ointe à la partie avant inférieure de ladite clôture d'extrémité d'aile **(26),** laquelle étant une aile verticale et latérale pour l'interconnexion structurelle des extrémités d'ailes;
(iv) l'extrémité d'aile de la section à l'extrémité de flèche arrière **(30)** de l'aile médiane est jointe à la partie arrière supérieure de ladite clôture d'extrémité d'aile **(26);**
b) diviser au moins une des deux paires d'ailes de la conception normale, classique d'aile en structure caisson d'un aéronef, c'est-à-dire les ailes avant **(3)** et/ou les ailes arrière **(5),** dans laquelle le processus de division comprend au moins une des étapes suivantes:
(i) diviser les ailes avant à flèche arrière **(3)** de la conception normale, classique d'aile en structure caisson d'un aéronef en sections à la racine **(13** ou **37)** et en sections à l'extrémité **(14** ou **34),** dans lequel les sections à l'extrémité **(14** ou **34)** ayant une flèche arrière plus importante que les sections à la racine **(13** ou **37);**
(ii) diviserles ailes arrière à flèche avant **(3)** de la conception normale, classique d'aile en structure caisson d'un aéronef en sections à la racine **(15** ou **38)** et en sections à l'extrémité **(16** ou **35),** dans lequel les sections à l'extrémité **(16** ou **35)** ayant une flèche avant plus importante que les sections à la racine **(15** ou **38);**
et une étape de fabrication en structure caisson d'un aéronef amélioré.

10. L'aéronef de toutes les revendications allant de **3** à **8,** comprenant en plus:
a) une pluralité de moteurs montés sur les pièces de l'aéronef avec ou sans pièces d'interconnexion structurelles supplémentaires, ou intégrés à la structure des pièces de l'aéronef, sans limite à un seul type de système de propulsion, mais également une combinaison de différents types de moteurs et de différentes méthodes de propulsion;
b) une pluralité de dispositifs aérodynamiques fixés à au moins l'une des sections d'aile; comprenant également les clôtures d'extrémité d'ailes **(26)** et les ailerons et dérive **(22, 39).**
